# EUROPÄISCHE PATENTSCHRIFT

(11) **EP 2 211 523 B1**
(45) Veröffentlichungstag und Bekanntmachung des Hinweises auf die Patenterteilung: **04.05.2016**
(21) Anmeldenummer: 09151221.0
(22) Anmeldetag: 23.01.2009
(51) Int. Cl.: H04L 29/06, H04L 12/40, H04L 12/46

(54) **Kommunikationsnetzwerk und Umsetzermodul**
Communication network and conversion module
Réseau de communication et module de convertisseur

(43) Veröffentlichungstag der Anmeldung: 28.07.2010
(73) Patentinhaber: Siemens Aktiengesellschaft, 80333 München (DE)
(72) Erfinder: Beyer, Stefan, 92263 Ebermannsdorf (DE); Gebuhr, Harald, 90409 Nürnberg (DE)

(56) Entgegenhaltungen:
- EP-A1- 1 564 623
- WO-A1-02/50680
- WO-A2-00/10278
- WO-A2-2007/045554

## Beschreibung

Die Erfindung betrifft ein Kommunikationsnetzwerk für die Automatisierungstechnik mit einem einer übergeordneten Ebene zugeordnetem Automatisierungsgerät, welches über eine erste Datenleitung mit einem Umsetzermodul verbunden ist, wobei das Umsetzermodul über eine zweite Datenleitung mit zumindest einem Endgerät in einer untergeordneten Ebene verbunden ist.

Des Weiteren betrifft die Erfindung ein Umsetzermodul für die Automatisierungstechnik, umfassend einen ersten Anschluss zum Anschluss an eine erste Datenleitung für eine Kommunikation mit einer übergeordneten Ebene, einen zweiten Anschluss zum Anschluss an eine zweite Datenleitung für eine Kommunikation mit einer untergeordneten Ebene, mit einem Umsetzmittel zur Umsetzung eines ersten Protokolls der übergeordneten Ebene in ein zweites Protokoll der untergeordneten Ebene.

Aus der WO 02/50680 A1 ist ein Kommunikationsnetzwerk mit einem Netzwerkdevice welche unterschiedliche Arten von Netzwerken verbindet, bekannt. Dabei weist das Netzwerkdevice Mittel für ein Inter-/Intranet Sicherheitsprotokoll auf.

Die EP 1 564 623 A1 beschreibt ein System und ein Verfahren um ein Computersystem vor Angriffen aus dem Netz zu schützen.

In der Automatisierungstechnik werden industrielle Kommunikationssysteme, beispielsweise ein Feldbus, Profibus, Profinet zur Kommunikation von Feldgeräten mit übergeordneten Automatisierungssystemen genutzt. So können beispielsweise speicherprogrammierbare Steuerungen über einen Feldbus zu einer dezentralen Peripherie, welche Prozessgrößen entgegennimmt und zu der speicherprogrammierbaren Steuerung sendet, verbunden werden.

Bei einem Übergang von einer ersten Kommunikationsebene eines industriellen Prozesses in eine zweite Kommunikationsebene des industriellen Prozesses, kann allerdings die Notwendigkeit auftreten, von einem Feldbussystem zu einem anderen Feldbussystem zu wechseln. Dieser Wechsel wird mittels Umsetzermodulen bzw. durch darauf ausgelegte Kommunikationsnetzwerke, welche die unterschiedlichen Feldbussysteme beinhalten, realisiert.

Auch kann es in der Automatisierungstechnik vorkommen, dass sicherheitsrelevante Prozesse automatisiert werden müssen und somit dafür auf Sicherheit ausgelegte Komponenten eingesetzt werden müssen. Nun kann es aber in den unterschiedlichen Ebenen der Feldbussysteme vorkommen, dass beispielsweise in der ersten Ebene sicherheitsgerichtete Geräte eingesetzt sind und damit auch ein Kommunikationsprotokoll, welches auf Sicherheitsfunktionen ausgerichtet ist, in der ersten Ebene gefahren wird. In der zweiten Ebene sind hingegen über ein Umsetzermodul Endgeräte mit der ersten Ebene verbunden. Diese Endgeräte befinden sich aber nicht zwingend in einer Sicherheitszone und müssen dementsprechend nicht auf Sicherheit ausgelegt sein. Demzufolge ist es in der zweiten Ebene auch nicht nötig, ein Sicherheitsprotokoll zu fahren und das Umsetzermodul ist dementsprechend nicht für Sicherheitstechnik ausgelegt. Ändern sich aber die Fertigungsbedingungen und wird dadurch eine Sicherheitstechnik gefordert, so muss das Umsetzermodul gegen ein Umsetzermodul mit Sicherheitstechnik ausgetauscht werden und die Anlage neu konfiguriert werden.

Es ist Aufgabe der Erfindung ein Kommunikationsnetzwerk und ein Umsetzermodul für die Automatisierungstechnik bereitzustellen, welches einen Betrieb mit einem auf Sicherheit ausgelegten Endgerät ermöglicht und einem Projekteur einer solchen Anlage die Projektierung erleichtert.

Die Erfindung wird durch ein Kommunikationsnetzwerk für die Automatisierungstechnik mit den Merkmalen gemäß Anspruch 1 gelöst.

Beispielsweise ist das Umsetzermodul ein Umsetzermodul für einen IO-Link, der IO-Link kann als IO-Master angesehen werden an dem IO-Slaves angeschlossen werden. Diese IO-Slaves untergliedern sich in vorzugsweise Aktoren und Sensoren, also Endgeräte welche entweder Eingangsgrößen entgegennehmen oder Ausgangsgrößen abgeben. Weiterhin lassen sich die Endgeräte in Standard-Endgeräte und Sicherheits-Endgeräte unterteilen. Beim Anschluss von Standard-Endgeräten an das als IO-Master ausgestaltete Umsetzermodul sind für den Einsatz des Kommunikationsnetzwerkes keine weiteren Schritte erforderlich. Wird aber ein Sicherheits-Endgerät an das Umsetzermodul angeschlossen, so muss für den Kommunikationsverbund des Kommunikationsnetzwerkes auch die Verbindung von Umsetzermodul zu dem Endgerät auf Sicherheit ausgerichtet werden. Hierbei ist es besonders vorteilhaft, dass das Umsetzermodul die Mittel zum Betreiben einer sicherheitsgerichteten Kommunikation über das Freigabemittel aktiviert, wobei das Freigabemittel zur Aktivierung auf das Vorhandensein eines angeschlossenen Sicherheits-Endgerät zurückgreift. Vorzugsweise ist die übergeordnete Ebene als eine auf Sicherheit ausgerichtete Kommunikationsebene ausgestaltet. Hier wird beispielsweise von einer speicherprogrammierbaren Steuerung über ein Profibus, welcher mit der Funktionalität Profi-Save versehen ist über eine erste Datenleitung zu dem Umsetzermodul mit einem auf Sicherheit ausgerichteten ersten Protokoll kommuniziert. Da das Umsetzermodul nun über die aktivierten Mittel zum Betrieb einer sicherheitsgerichteten Kommunikation für eine durchgängige sicherheitsgerichtete Kommunikation hergerichtet ist, kann eine sicherheitsgerichtete Kommunikation von der übergeordneten Ebene in die untergeordnete Ebene bis zu den Endgeräten erfolgen.

Dabei weist das Endgerät ein von dem Freigabemittel auslesbares Deskriptorelement auf. In diesem Deskriptorelement ist vorzugsweise eine Codefolge, Prüfziffer, Freigabelizenz, Sicherheitsstufe oder ein Einsatzkriterium hinterlegt. Durch das Auslesen des Deskriptorelementes durch die innerhalb des Umsetzermoduls angeordneten Freigabemittel, kann sich das Umsetzermodul automatisch auf eine jeweils geforderte Sicherheitsstufe einstellen.

In einer bevorzugten Ausgestaltung ist die zweite Datenleitung als eine 3-Draht-Leitung ausgestaltet. Eine Kommunikation für einen IO-Link über eine Datenleitung als eine 3-Draht-Leitung stellt hierbei ein Minimum dar. Es können optional zwei weitere Leitungen hinzugenommen werden. Ein entsprechender Steckkontakt für eine IO-Link-Datenleitung hätte somit fünf Kontakte bzw. fünf Pins.

Für das Umsetzermodul wird die Aufgabe durch die Merkmale des Anspruchs 5 gelöst. Dieses Umsetzermodul wird vorzugsweise als IO-Master eingesetzt, wobei über die Freigabemittel ein Freischalten eines Sicherheitsprotokolls realisiert ist.

Dabei ist das Freigabemittel derart ausgestaltet ist, dass ein Deskriptorelement eines angeschlossenen Endgerätes auslesbar ist. Aufgrund der ausgelesenen Informationen des Deskriptorelementes kann das Umsetzermodul über die Freigabemittel entsprechend seiner zu erfüllenden Funktionalität umgeschaltet bzw. gesteuert werden. Ist ein Sicherheits-Endgerät anstelle eines Standard-Endgerätes angeschlossen, so sorgt das Freigabemittel dafür, dass die Mittel zum Betrieb einer sicherheitsgerichteten Kommunikation zwischen Umsetzermodul und Endgerät aktiviert werden.

Weiterhin ist es von Vorteil, dass das Mittel mit Speichermitteln für eine sicherheitsgerichtete Software ausgestaltet ist. Zur Gewährleistung der ordnungsgemäßen Funktionalität innerhalb eines Umsetzermoduls, ist in dem Umsetzermodul eine Systemsoftware implementiert, welche die funktionalen Abläufe steuert. Diese Systemsoftware wird auch Firmware genannt. Das Umsetzermodul weist also mit Vorteil Speichermittel für eine sicherheitsgerichtete Software auf, welches eine Firmware für ein auf Sicherheit ausgestaltetes Umsetzermodul bereitstellt.

Weitere Vorteile und Ausgestaltungsmerkmale sind der Zeichnung zu entnehmen. Es zeigen:
- FIG 1: ein Kommunikationsnetzwerk mit einer ersten und einer zweiten Kommunikationsebene und
- FIG 2: ein Umsetzermodul mit einem angeschlossenen Enderät.

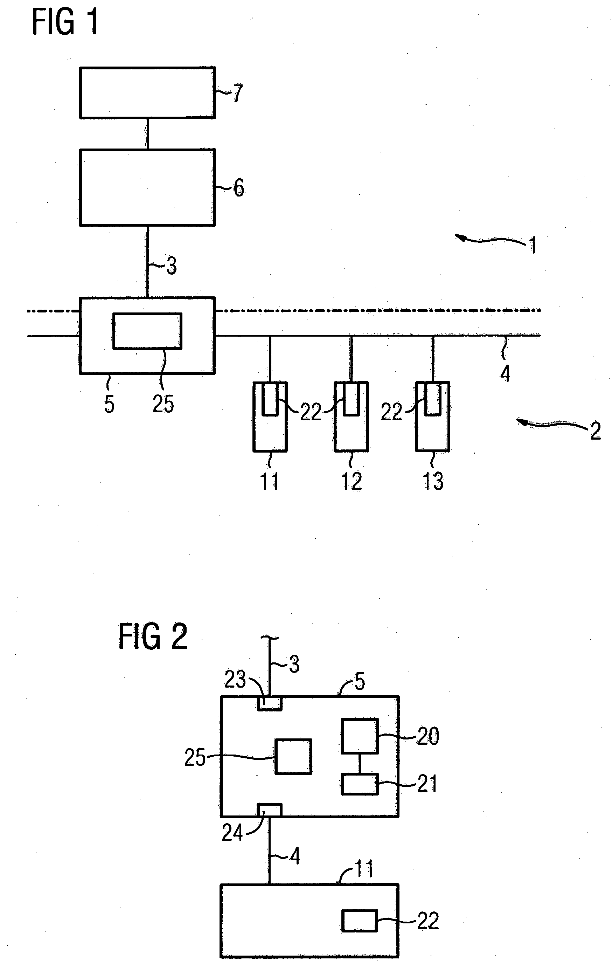

Gemäß FIG 1 ist ein Leitsystem 7 über ein Bussystem an ein Automatisierungsgerät 6 angeschlossen. Das Automatisierungsgerät 6 ist als eine auf Sicherheitsfunktionen ausgerichtete SPS ausgestaltet. Das Automatisierungsgerät 6 ist über eine erste Datenleitung 3 mit einem Umsetzermodul 5 verbunden. Die zuvor beschriebenen Komponenten beschreiben dabei eine erste Kommunikationsebene bzw. eine übergeordnete Ebene 1, die Trennung von der ersten Kommunikationsebene 1 zu einer zweiten Kommunikationsebene bzw. einer untergeordneten Ebene 2 ist durch eine strichpunktierte Linie angedeutet. In der ersten Kommunikationsebene 1 wird ein erstes Protokoll zum Datenaustausch zwischen den in der ersten Kommunikationsebene 1 angeordneten Kommunikationsteilnehmer genutzt. In der zweiten Kommunikationsebene 2 wird ein zweites Protokoll zum Datenaustausch der in der zweiten Kommunikationsebene 2 angeordneten Kommunikationsteilnehmer genutzt. Das Umsetzermodul 5 zeigt hier vorzugsweise die Funktionalität einer Schnittstelle und ist dazu ausgestaltet über ein Umsetzmittel 25 das erste Protokoll in das zweite Protokoll umzusetzen und umgekehrt. An das Umsetzermodul 5 sind über eine zweite Datenleitung 4 ein erstes Endgerät 11, ein zweites Endgeräte 12 und ein drittes Endgerät 13 angeschlossen. Das erste Endgerät 11 ist dabei als ein Sensor ausgelegt, welcher die Temperatur innerhalb eines chemischen kritischen Prozesses misst. Das zweite Endgerät 12 und das dritte Endgerät 13 sind als Aktuatoren ausgestaltet um Sicherheitsmaßnahmen zu aktivierten.

Derartige Sensoren/Aktuatoren sind für auf Sicherheit ausgelegte Anlagen diversitär ausgestaltet.

FIG 2 zeigt in eine Detaildarstellung das Umsetzermodul 5 mit einem angeschlossenen Endgerät 11. Zum Anschluss der ersten Datenleitung 3 für eine Kommunikation des Umsetzermoduls 5 mit der übergeordneten Ebene 1 weist das Umsetzermodul 5 einen ersten Anschluss 23 auf. Zum Anschluss an eine zweite Datenleitung 4 für eine Kommunikation mit der untergeordneten Ebene 2 ist ein zweiter Anschluss 24 vorgesehen. Zur Umsetzung des in der ersten Ebene 1 genutzten ersten Protokolls in das in der zweiten Ebene 3 genutzten zweiten Protokolls ist das Umsetzmittel 25 als Protokoll und Signalumsetzer augestaltet.

Zum Betreiben einer sicherheitsgerichteten Kommunikation innerhalb der untergeordneten Ebene 2 wird über ein Mittel 20 zum Betreiben einer sicherheitsgerichteten Kommunikation die Funktionalität des Umsetzermodul 5 angepasst. Das Mittel 20 ist über ein Freigabemittel 21 aktivierbar. Das Freigabemittel 21 ist dazu ausgestaltet, über den zweiten Anschluss 24 mittels der zweiten Datenleitung 4 aus einem Deskriptorelement 22 des ersten Endgerätes 11 ein Identifikationsmerkmal auszulesen. Das Identifikationsmerkmal wird in dem Freigabemittel 21 ausgewertet und passt das Umsetzermodul 5 an, die für den Betrieb von sicherheitsgerichteten Endgeräten 11,12, 13 notwendigen bzw. geforderten Sicherheitsbedingungen an.

Als Vorteile werden angesehen:
- Standard-Endgeräte und Sicherheits-Endgeräte können an ein Umsetzermodul angeschlossen werden. Es wird damit möglich, nur noch eine Variante in der Lagerhaltung zu führen.
- Die Deskriptorelemente in den Sicherheits-Endgeräten können einen Lizenzschlüssel enthalten und diese Lizenzschlüssel schalten wiederum ein im Umsetzermodul hinterlegtes Schloss frei, so dass das Umsetzermodul serine Funktionalität mit Mehrwert erst freischaltet, wenn ein Endgerät mit Lizenzschlüssel angeschaltet wird.
- Eine fälschliche Einbindung von Standard-Endgeräten in einem Sicherheitskreis kann über das Umsetzermodul aufgedeckt werden und es kann mit einer die Sicherheit beeinflussenden Meldung darauf reagiert werden. Es wird dadurch vermieden, dass in einem Reparaturfall fälschlicherweise ein ungeeignetes Endgerät eingesetzt wird.

## Patentansprüche

1. Kommunikationsnetzwerk für die Automatisierungstechnik mit einem einer übergeordneten Ebene (1) zugeordnetem Automatisierungsgerät (6), welches über eine erste Datenleitung (3) mit einem Umsetzermodul (5) verbunden ist, wobei das Umsetzermodul (5) über eine zweite Datenleitung (4) mit mindestens einem Endgerät (11,12,13) in einer untergeordneten Ebene (2) verbunden ist, wobei das Umsetzermodul (5) ein Mittel (20) zum Betreiben einer sicherheitsgerichteten Kommunikation innerhalb der untergeordneten Ebene (2) aufweist, **dadurch gekennzeichnet, dass** die übergeordnete Ebene (1) ein erstes Feldbussystem der Automatisierungstechnik und die untergeordnete Ebene ein zweites Feldbussystem der Automatisierungstechnik umfasst, wobei das Umsetzermodul zur Umsetzung eines ersten Protokolls der übergeordneten Ebene (1) in ein zweites Protokoll der untergeordneten Ebene (2) ausgestaltet ist, wobei das Mittel (20) über ein Freigabemittel (21) aktivierbar ist, wobei das Endgerät (11,12,13) ein von dem Freigabemittel (21) auslesbares Deskriptorelement (22) aufweist, und das Freigabemittel (21) dazu ausgestaltet ist aus dem Deskriptorelement (22) des Endgerätes (11,12,13) ein Identifikationsmerkmal auszulesen, wobei das Identifikationsmerkmal in dem Freigabemittel (21) ausgewertet wird und das Umsetzermodul (5) an die Bedingungen für den Betrieb von sicherheitsgerichteten Endgeräten (11,12,13) angepasst wird.

2. Kommunikationsnetzwerk nach Anspruch 1,
wobei die zweite Datenleitung (4) als eine Drei-Draht-Leitung ausgestaltet ist.

3. Kommunikationsnetzwerk nach einem der Ansprüche 1 bis 2, wobei das Umsetzermodul (5) als ein IO-Link-Master und das Endgerät (11,12,13) als ein IO-Link-Slave ausgestaltet ist.

4. Umsetzermodul (5) für die Automatisierungstechnik, umfassend einem ersten Anschluss (23) zum Anschluss an eine erste Datenleitung (3) für eine Kommunikation mit einer übergeordneten Ebene (1), einem zweiten Anschluss (24) zum Anschluss an eine zweite Datenleitung (4) für eine Kommunikation mit einer untergeordneten Ebene (2), mit einem Umsetzmittel (25) zur Umsetzung eines ersten Protokolls der übergeordneten Ebene (1) in ein zweites Protokoll der untergeordneten Ebene (2), mit einem Mittel (20) zum Betreiben einer sicherheitsgerichteten Kommunikation innerhalb der untergeordneten Ebene (2), ausgestaltet zum Anschluss eines ersten Feldbussystems über den ersten Anschluss (23) und zum Anschluss eines zweiten Feldbussystems über den zweiten Anschluss (24), wobei das Mittel (20) über ein Freigabemittel (21) aktivierbar ist, wobei das Freigabemittel (21) derart ausgestaltet ist, ein Deskriptorelement (22) eines am zweiten Feldbussystem angeschlossenen Endgerätes (11,12,13) auszulesen.

5. Umsetzermodul (5) nach Anspruch 4,
wobei das Mittel (20) mit Speichermitteln für eine sicherheitsgerichtete Software ausgestaltet ist.

## Claims

1. Communication network for automation engineering having an automation appliance (6) which is associated with a superordinate plane (1) and which is connected to a converter module (5) by means of a first data line (3), wherein the converter module (5) is connected to at least one terminal (11, 12, 13) in a subordinate plane (2) by means of a second data line (4), wherein the converter module (5) has a means (20) for operating safety-oriented communication within the subordinate plane (2), **characterized in that** the superordinate plane (1) comprises a first field bus system from automation engineering and the subordinate plane comprises a second field bus system from automation engineering, wherein the converter module is designed to convert a first protocol of the superordinate plane (1) into a second protocol of the subordinate plane (2), wherein the means (20) can be activated via an enabling means (21), wherein the terminal (11, 12, 13) has a descriptor element (22) which can be read by the enabling means (21), and the enabling means (21) is designed to read an identification feature from the descriptor element (22) of the terminal (11, 12, 13), wherein the identification feature is evaluated in the enabling means (21) and the converter module (5) is matched to the conditions for operation of safety-oriented terminals (11, 12, 13).

2. Communication network according to Claim 1,
wherein the second data line (4) is in the form of a three-wire line.

3. Communication network according to one of Claims 1 to 2, wherein the converter module (5) is in the form of an 10 link master and the terminal (11, 12, 13) is in the form of an IO link slave.

4. Converter module (5) for automation engineering, comprising a first connection (23) for connection to a first data line (3) for communication with a superordinate plane (1), a second connection (24) for connection to a second data line (4) for communication with a subordinate plane (2), having a conversion means (25) for converting a first protocol of the superordinate plane (1) into a second protocol of the subordinate plane (2), having a means (20) for operating safety-oriented communication within the subordinate plane (2), designed to connect a first field bus system via the first connection (23) and to connect a second field bus system via the second connection (24), wherein the means (20) can be activated via an enabling means (21), wherein the enabling means (21) is designed to read a descriptor element (22) of a terminal (11, 12, 13) connected to the second field bus system.

5. Converter module (5) according to Claim 4,
wherein the means (20) is produced with memory means for a piece of safety-oriented software.

## Revendications

1. Réseau de communication pour la technique d'automatisation, comprenant un appareil ( 6 ) d'automatisation qui est associé à un plan ( 1 ) supérieur hiérarchiquement et qui est relié à un module ( 5 ) de convertisseur par une première ligne ( 3 ) de données, le module ( 5 ) de convertisseur étant relié dans un plan ( 2 ) subordonné à un terminal ( 11, 12, 13 ) par une deuxième ligne ( 4 ) de données, le module ( 5 ) de convertisseur ayant un moyen ( 20 ) pour effectuer une communication sécurisée au sein du plan ( 2 ) subordonné, **caractérisé en ce que** le plan ( 1 ) supérieur hiérarchiquement comprend un premier système de bus de terrain de la technique d'automatisation et le plan subordonné comprend un deuxième système de bus de terrain de la technique d'automatisation, le module de convertisseur étant conformé pour transformer un premier protocole du plan ( 1 ) supérieur hiérarchiquement en un deuxième protocole du plan ( 2 ) subordonné, le moyen ( 20 ) pouvant être activé par un moyen ( 21 ) de libération, le terminal ( 11, 12, 13 ) ayant un élément ( 22 ) de descripteur pouvant être déchiffré par le moyen ( 21 ) de libération, et le moyen ( 21 ) de libération étant conformé pour déchiffrer dans l'élément ( 22 ) de descripteur de l'appareil ( 11, 12, 13 ) terminal une caractéristique d'identification, la caractéristique d'identification étant exploitée dans le moyen ( 21 ) de libération et le module ( 5 ) de convertisseur étant adapté aux conditions de fonctionnement des terminaux ( 11, 12, 13 ) sécurisés.

2. Réseau de communication suivant la revendication 1,
dans lequel la deuxième ligne ( 4 ) de données est conformée en ligne à trois fils.

3. Réseau de communication suivant la revendication 1 à 2, dans lequel le module ( 5 ) de convertisseur est conformé en Maître IO-link et le terminal ( 11, 12, 13 ) est conformé en esclave IO-link.

4. Module ( 5 ) de convertisseur pour la technique d'automatisation comprenant une première borne ( 23 ) de connexion à une première ligne ( 3 ) de données pour une communication avec un plan ( 1 ) supérieur hiérarchiquement, une deuxième borne ( 24 ) de connexion à une deuxième ligne ( 4 ) de données pour une communication avec un plan ( 2 ) subordonné, un moyen ( 25 ) de convertisseur pour transformer un premier protocole du plan supérieur hiérarchiquement en un deuxième protocole du plan ( 2 ) subordonné, un moyen ( 20 ) pour effectuer une communication sécurisée au sein du plan ( 2 ) subordonné conformée pour le raccordement d'un premier système de bus de terrain par l'intermédiaire de la première borne ( 23 ) et pour le raccordement d'un deuxième système de bus de terrain par l'intermédiaire de la deuxième borne ( 24 ), le moyen ( 20 ) pouvant être activé par un moyen ( 21 ) de libération, le moyen ( 21 ) de libération étant conformé de manière à déchiffrer un élément ( 22 ) de descripteur d'un terminal ( 11, 12, 13 ) raccordé au deuxième système de bus de terrain.

5. Module ( 5 ) de convertisseur, suivant la revendication 4, dans lequel le moyen ( 20 ) est conformé en ayant des moyens de mémoire pour un logiciel sécurisé.
